# EUROPÄISCHE PATENTSCHRIFT

(11) **EP 0 992 525 B1**
(45) Veröffentlichungstag und Bekanntmachung des Hinweises auf die Patenterteilung: **17.04.2002**
(21) Anmeldenummer: 99118056.3
(22) Anmeldetag: 22.09.1999
(51) Int. Cl.: C08G 73/10, C08G 69/10

(54) **Verfahren zur Herstellung von biologisch abbaubaren Polymeren mit wiederkehrenden Succinyleinheiten**
Process of preparation of biodegradable polymers having recurring succinyl units
Procédé de préparation de polymères biodegradables contenant des unités succinyl répétitives

(30) Priorität: 05.10.1998 DE 19845639
(43) Veröffentlichungstag der Anmeldung: 12.04.2000
(73) Patentinhaber: Bayer Aktiengesellschaft, 51368 Leverkusen (DE)
(72) Erfinder: Schubart, Ruediger, Dr., 51467 Bergisch Gladbach (DE)

(56) Entgegenhaltungen:
- DE-A- 4 023 463
- DE-A- 4 221 875
- DE-A- 4 342 316
- DE-A- 19 532 717

## Beschreibung

Die Erfindung betrifft ein Verfahren zur Herstellung von biologisch abbaubaren Polymeren mit wiederkehrenden Succinyleinheiten, insbesondere von Polyasparaginsäure (PAA) und Polysuccinimid (PSI).

Die Herstellung und Verwendung von Polysuccinimid und Polyasparaginsäure und ihrer Derivate ist seit langem Gegenstand zahlreicher Veröffentlichungen und Patente.

US-A 4 839 461 (=EP-A 0 256 366) beschreibt die Herstellung von PAA aus Maleinsäureanhydrid (MSA), Wasser und Ammoniak. MSA wird in wäßrigem Medium unter Zugabe von konzentrierter Ammoniaklösung umgesetzt und anschließend polymerisiert. Während dieser Polymerisation wird die Masse zunächst hochviskos und anschließend fest-porös, was ein verfahrenstechnisch aufwendiges Handling erfordert.

US-A 5 296 587 beschreibt die Herstellung von PSI aus MSA, Wasser und Ammoniak. MSA wird in Wasser zu Maleinsäure hydrolysiert und anschließend mit konzentrierter Ammoniaklösung in das Ammoniumsalz überführt. In einem Rührreaktor wird das Wasser aus der Lösung verdampft und anschließend das Monoammoniumsalz in Masse bei Temperaturen oberhalb von 170°C zu PSI polymerisiert. Hierbei wird die Masse in mehreren Stunden über hochviskose Phasenzustände hinweg zum festen PSI umgesetzt und anschließend zu PAA hydrolysiert.

US-A 5 288 783 beschreibt die Herstellung von PAA aus Maleinsäure oder Fumarsäure, Wasser und Ammoniak. MSA wird mit Wasser im Rührkessel vermischt und unter Kühlen zu Maleinsäure umgesetzt. Durch Zugabe von konzentrierter Ammoniaklösung wird das Maleinsäuremonoammoniumsalz hergestellt. Anschließend wird das enthaltene Wasser verdampft und das trockene Monoammoniumsalz bei Temperaturen von 190 bis 350°C polymerisiert. Alternativ wird vorgeschlagen, das in wäßriger Lösung vorliegende Monoammoniumsalz bei Temperaturen von 160 bis 200°C durch Extrusion zu PSI weiter zu verarbeiten. Das auf einem der beiden Verfahrenswege hergestellte PSI wird anschließend alkalisch zu PAA hydrolysiert.

EP-A 593 187 beschreibt die Herstellung von PSI durch thermische Polymerisation von Maleinamidsäure bei Temperaturen von 160 bis 330°C bei einer Reaktionsdauer von 2 Minuten bis 6 Stunden. Es wird auch auf die Polykondensation im Lösungsmittel unter Verwendung von Kondensationshilfsmitteln hingewiesen.

DE-A 4 023 463 (US-A 5 142 062) beschreibt ein Verfahren zur Herstellung von Polysuccinimid in Gegenwart von Phosphorsäuren. DE-A 4 221 875 (= WO 94/01486) beschreibt die Herstellung von sogenannten modifizierten Polyasparaginsäuren durch Polykondensation von Asparaginsäure mit weiteren Verbindungen, gegebenenfalls in Gegenwart von Phosphorsäuren oder Derivaten davon. Aus WO 95/02007 ist bekannt, Polymerisate der Asparaginsäure durch Erhitzen von MSA und Säurederivaten des Ammoniaks herzustellen. Als Säure wird u.a. Phosphorsäure angegeben. Von den entsprechenden Salzen werden aber lediglich Diammoniumhydrogenphosphat und Monoammoniumdihydrogenphosphat erwähnt. Aus EP-A 604 813 (DE-A 4 244 031) ist ein Verfahren zur Herstellung von PSI und PAA aus Maleinamidsäure bekannt, bei dem man MSA und Ammoniak zu Maleinamidsäure umsetzt und die Maleinamidsäure einer Polymerisation unterwirft, die in Gegenwart von Phosphorsäuren und Polyphosphorsalzen durchgeführt werden kann.

In WO 96/34908 wird die Synthese von PAA aus MSA und Triammoniumphosphat beschrieben.

DE 4 322 410 zeigt außerdem den Syntheseweg zu PSI bzw. PAA über die Umsetzung von Maleinsäureanhydrid mit Ammoniumcarbonat unter Erwärmung auf.

Nachteilig an den bekannten Verfahren ist, dass sie sehr aufwendig sind und zu einem großen Teil zu Produkten mit unbefriedigender biologischer Abbaubarkeit führen und bei der Herstellung erheblicher Reinigungsaufwand betrieben werden muß. Bei der Kondensation von Asparaginsäure mit Phosphorsäure muß nach der Kondensation eine aufwendige Abtrennung der Phosphorsäure angeschlossen werden.

Der Erfindung liegt daher die Aufgabe zugrunde, ein verbessertes Verfahren zur Herstellung von Polymeren mit wiederkehrenden biologisch völlig abbaubaren Succinyleinheiten, insbesondere von PSI und PAA, zur Verfügung zu stellen, bei dem nach der Kondensation möglichst keine aufwendigen Reinigungsoperationen mehr durchzuführen sind.

Die Lösung der Aufgabe und folglich die Erfindung betrifft ein Verfahren zur Herstellung von biologisch abbaubaren Polymeren mit wiederkehrenden Succinyleinheiten, dadurch gekennzeichnet, dass man eine gegebenenfalls substituierte 1,4-Butandicarbonsäure oder ein Derivat der 1,4-Butandicarbonsäure mit Acetanhydrid, gegebenenfalls zunächst bei Raumtemperatur vermischt und danach durch Temperatursteigerung unter Polykondensation zu PSI bzw. zu PAA umsetzt, wobei Acetanhydrid durch das freiwerdende Kondensationswasser in Essigsäure überführt und abdestilliert wird.

Bevorzugt wird beim erfindungsgemäßen Verfahren Asparaginsäure (ASP) eingesetzt. Natürlich kann auch Maleinsäuremonoamid eingesetzt werden. Beim Einsatz von Monoammoniummaleinsäure sollte erst eine thermische Vorreaktion durch Erhitzen auf etwa 120-150°C durchgeführt und danach die Polykondensation zu Polysuccinimid durch Zugabe von Acetanhydrid unter weiterem Erhitzen erreicht werden.

Im Falle des Einsatzes von ASP und Acetanhydrid beträgt das Verhältnis von ASP zu Acetanhydrid bevorzugt 1:1. Überschüsse an Acetanhydrid bis 50 Mol-% können jedoch auch verwendet werden.

Überraschenderweise erhält man durch das erfindungsgemäße Verfahren nicht nur Polymere mit wiederkehrenden Succinyleinheiten, die praktisch frei von Reaktionsbegleitsubstanzen sind, sondern auch Reaktionsprodukte die zu 100 % biologisch abbaubar sind.

Der Begriff Polykondensation bedeutet dabei für die Zwecke der vorliegenden Erfindung keine Einschränkung auf ein bestimmtes Verfahren zur Herstellung höhermolekularer Stoffe. Polymerisationen sind ebenfalls Gegenstand der vorliegenden Erfindung.

Die erfindungsgemäß hergestellten Polymere weisen vorzugsweise wiederkehrende Succinyl-Einheiten mit wenigstens einer der folgenden Strukturen auf: 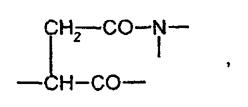 bevorzugt

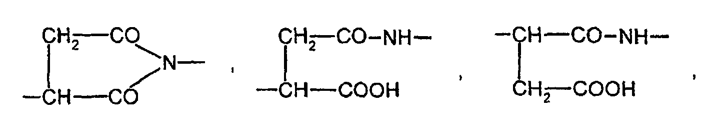

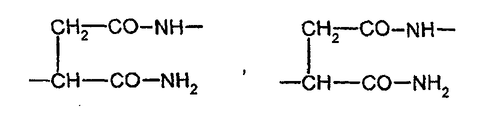

Weiterhin können je nach Ausführungsform Iminodisuccinateinheiten, vorzugsweise wenigstens eine der folgenden Strukturen, enthalten sein: 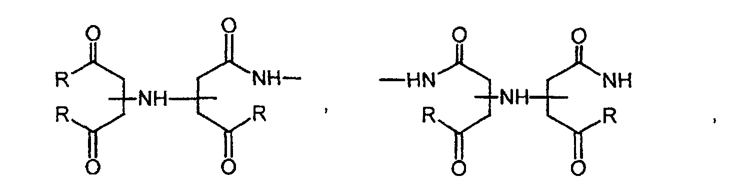 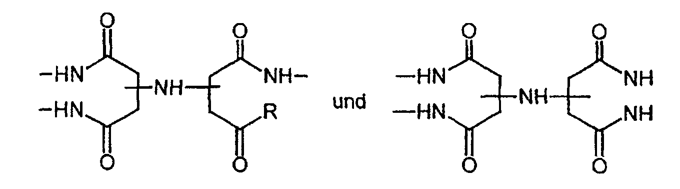 wobei R für OH, O-NH₄⁺ oder NH₂ steht.

Die Iminodisuccinateinheiten können im Polymer statistisch verteilt oder bevorzugt als Endgruppe vorliegen. Bezogen auf die Summe aller wiederkehrenden Einheiten liegt die Iminodisuccinateinheit gegebenenfalls zu wenigstens 0,1 Mol-% vor. Das molare Verhältnis der im Polymer eingebauten Iminodisuccinateinheiten zur Summe aller im Polymer eingebauten Monomereinheiten beträgt vorzugsweise 0,1 Mol.-% bis 99 Mol-%, bevorzugt 1 Mol-% bis 50 Mol-%, besonders bevorzugt 2 Mol-% bis 25 Mol-%.

Zusätzlich können durch geeignete Reaktionsführung und Wahl der Edukte weitere wiederkehrende Einheiten enthalten sein, z.B.
a) Äpfelsäure-Einheiten der Formel 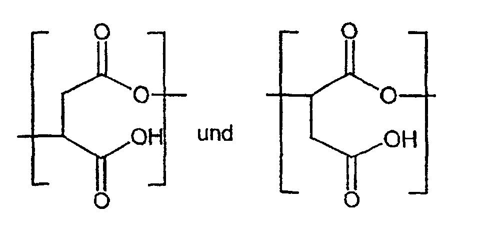
b) Maleinsäure- und Fumarsäure-Einheiten der Formel

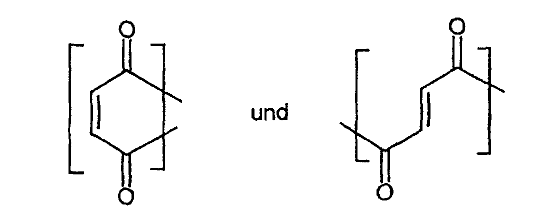

Das erhaltene Polymerisationsprodukt, welches Polysuccinimideinheiten enthält, kann in üblicher Weise zu Polyasparaginsäure und deren Salze hydrolysiert werden.

Hinsichtlich weiterer Ausführungsvarianten sind insbesondere folgende Verfahren und Vorrichtungen bevorzugt:

Die Edukte können einzeln oder in Gemischen, in Substanz oder in Lösung, eingesetzt werden. In einer bevorzugten Ausführungsform wird in der Schmelze gearbeitet.

Die Umsetzung der Edukte kann ebenfalls in Gegenwart eines Lösungsmittels durchgeführt werden. Als Lösungsmittel geeignet sind Wasser, niedere Alkohole, polar aprotische Lösungsmittel, wie Dimethylformamid, Formamid und Harnstoffe, N-Alkylpyrrolidon, Sulfolan, Aceton, Dimethylsulfoxid, Polyalkylenglykole, Polyalkylenglykolmonoalkylether und Polyalkylenglykoldialkylether. Ebenfalls geeignet sind überkritische Gase, wie z.B. Kohlendioxid und Ammoniak. Besonders geeignet ist Wasser und/oder Formamid sowie Essigsäure.

Die thermische Polykondensation wird im allgemeinen bei Temperaturen zwischen 100°C und 300°C, bevorzugt zwischen 120°C und 250°C, besonders bevorzugt zwischen 140°C und 200°C durchgeführt.

Die Verweilzeit kann dabei bis auf 600 Minuten ausgedehnt werden.

Gegebenenfalls kann zum Ende der Polykondensation auch MSA oder weitere Maleinsäure und eine Base zudosiert werden. Geeignete Basen sind Alkali- und Erdalkalihydroxide, Amine oder Carbonate, bevorzugt Natronlauge, Kalilauge, Soda oder Kaliumcarbonat, Ammoniak, Triethanolamin, Diethylamin, Diethanolamin, Alkylamine etc.

Eine bevorzugte Ausführungsform des oben beschriebenen allgemeinen Verfahrens ist dadurch gekennzeichnet, daß die Reaktion der Edukte adiabatisch erfolgt und die dabei freiwerdende Reaktionswärme dazu eingesetzt wird, um das Reaktionsgemisch auf Polymerisationstemperatur zu bringen, um das N-haltige niedermolekulare Derivat unter Erhalt eines Polymeren mit biologisch abbaubaren wiederkehrenden Succinyleinheiten zumindest teilweise zu polymerisieren.

Für die thermische Polymerisation eignen sich grundsätzlich alle Apparate, die bei einer engen Verweilzeitverteilung der viskos-flüssigen Phase die notwendige Mindestverweilzeit zur Polymerisation und gleichzeitig eine zumindest partielle Verdampfung des Lösungsmittels, insbesondere des Wassers, sowie des bei der Reaktion gebildeten Wassers bzw. Essigsäure ermöglichen.

Bevorzugte Vorrichtungen zur thermischen Polymerisation sind also alle Apparate, die eine definierte Verweilzeit mit einer engen Verweilzeitverteilung für die feste oder hochviskosflüssige Phase aufweisen und gleichzeitig eine gute Temperierung durch ein zumindest partielles Verdampfen des Lösungsmittels - Wasser, Lösungsmittel oder Essigsäure - und/oder des bei der Polymerisation gebildeten Reaktionswassers bzw. Essigsäure ermöglichen. Solche bevorzugten Vorrichtungen können beispielsweise sein:
a) Verweilrohre,
b) Hochviskosreaktoren, bevorzugt Schnecke-Reaktoren, List-Reaktoren oder Buss-Reaktoren,
c) Trockner, bevorzugt Schaufeltrockner, Sprühtrockner, Tellertrockner, Bandtrockner,
d) Rührkesselkaskaden,
e) Dünnschichtverdampfer,
f) Mehrphasen-Wendelrohr-Reaktoren
   (DT 1 667 051, DE-A 219 967).

In einer weiteren Variante des erfindungsgemäßen Verfahrens kann eine Eduktkomponente an mehreren Stellen in geeigneter Weise entlang eines Rohr- bzw. Mehrphasenwendelrohrreaktors eindosiert werden, so daß ein optimales Temperaturprofil erzielt werden kann. Dadurch wird vermieden, daß es zum Auftreten von zu hohen Temperaturen kommt, die zu Produktschädigungen rühren können. Die Anzahl der zusätzlichen (ohne die Dosierung in die Mischdüse am Rohreintritt bzw. Mehrphasenwedelrohrreaktoreintritt) Dosierstellen liegt bevorzugt im Bereich von bis zu 10. Die Art der Zuspeisung wird so gewählt, daß eine gute Vermischung mit der Reaktionslösung erfolgt.

Die Dosierstellen dienen auch dazu, gegebenenfalls weitere zuzusetzende Comonomere, wie Aminosäuren beispielsweise Glyzin etc. zuzusetzen.

Gleichzeitig kann die letzte Dosierstelle, die kurz vor dem Reaktorausgang liegt, dazu benutzt werden, eine der oben genannten Basen und gegebenenfalls weiteres Ausgangsprodukt zuzugeben, um eine Pfropfung des Polymeren beispielsweise mit Iminodisuccinateinheiten zu erreichen.

Die Vermischung der Edukte kann je nach den verwendeten Edukten bei Temperaturen zwischen 0°C und 200°C erfolgen. Die Reaktion der verwendeten Edukte erfolgt bei 100 bis 350°C, bevorzugt bei 120 bis 260°C und besonders bevorzugt bei 140 bis 240°C. Zur Unterstützung der Temperaturführung während der Reaktion können auch Kühl- und Heizmedien eingesetzt werden. Weiterhin können Produkt-Edukt-Bereiche mit unterschiedlichen Temperaturen im Reaktionssystem zwecks Wärmetausch direkt oder indirekt in Kontakt gebracht werden.

Die Verweilzeit im Reaktorsystem wird vorzugsweise so gewählt, daß eine vollständige Umsetzung des im Unterschuß eingesetzten Edukts, beispielsweise Asparaginsäure gewährleistet ist. Zur praktisch vollständigen Polymerisation kann es erforderlich sein, das bereits kurz nach der Vermischung in der ersten Reaktionsstrecke, beispielsweise in einem Rührreaktor erhaltene Monomeren- und Oligomerengemisch in einer weiteren oben genannten Vorrichtung, bevorzugt einem Hochviskosreaktor, umzusetzen. Besonders bevorzugt kann jedoch ein Hochviskosreaktor eingesetzt werden, in dem die vollständige Polymer-Bildung durchgeführt werden kann. Die erhaltenen Reaktionsprodukte sind je nach Wasser-, Essigsäure- bzw. Lösungsmittelgehalt wegen der freiwerdenden Reaktionsenthalpie heiße Lösungen oder lösungsmittelhaltige, wasserhaltige, essigsäurehaltige Schmelzen. Die Reaktionsenthalpie kann weitgehend im Reaktor genutzt werden. Dadurch wird eine optimale Wärmeführung mit geringen Invest- und Betriebskosten einer verfahrenstechnischen Anlage erreicht, die zu einer hohen Wirtschaftlichkeit führt.

Beim Einsatz der Oligomer-haltigen Schmelzen in einem Hochviskosreaktor kann die Reaktionsgeschwindigkeit in einer bevorzugten Reaktionsführung durch die bereits vorgeheizte und aufgrund der freigesetzten Reaktionswärme partiell durch Verdampfen an Lösungsmittel verarmte viskose Masse erheblich gesteigert werden.

Das Verfahren kann kontinuierlich oder diskontinuierlich durchgeführt werden. Bevorzugte Reaktoren sind Hochviskosreaktoren, beispielsweise Schnecke-, Listund Buss-Reaktor.

Die primären Polymerprodukte können zunächst pulverisiert, dann mit Wasser ausgewaschen werden, wobei das Polysuccinimid zurückbleibt, das in üblicher Weise zur PAA bzw. zu Salzen beispielsweise Natriumpolyasparaginsäure hydrolysiert werden kann.

Die primären Polymerisationsprodukte können aber auch durch Umsetzung mit einer Base gegegebenenfalls in Gegenwart von Wasser in ein PAA-haltiges CopolymerSalz überführt werden. Diese Umwandlung von PSI-haltigen in PAA-haltige Copolymere geschieht in einer geeigneten Vorrichtung durch Hydrolyse. Bevorzugt ist dabei ein pH-Wert zwischen 5 und 14 geeignet. In besonders bevorzugter Form wird ein pH-Wert von 7 bis 12 gewählt, insbesondere durch den Zusatz einer Base. Geeignete Basen sind Alkali- und Erdalkalihydroxide, Amine oder Carbonate wie beispielsweise Natronlauge, Kalilauge, Soda oder Kaliumcarbonat, Ammoniak, Triethylamin, Triethanolamin, Diethylamin, Diethanolamin, Alkylamine etc. Die Hydrolyse des PSI kann somit teilweise aber auch vollständig erfolgen.

Niedermolekulare Anteile können aus dieser Lösung durch übliche Membrantechnologie nach Art der Meerwasserentsalzung abgetrennt werden. Sie können aber auch im Produkt verbleiben.

Die Temperatur bei der Hydrolyse liegt geeigneter Weise in einem Bereich einschließlich bis zum Siedepunkt der Succinylgruppen-haltigen Suspension oder Lösung bevorzugt bei 20 bis 150°C. Die Hydrolyse wird gegebenenfalls unter Druck durchgeführt. Die Hydrolyse wird gegebenenfalls unter Zusatz eines weiteren monoethylenisch ungesättigen Carbonsäurederivates durchgeführt. Geeignet sind beispielsweise Maleinsäureanhydrid, Maleinsäure, Citraconsäure, Itaconsäure, Aconitsäure, Acrylsäure und Fumarsäure.

Unter den basischen Bedingungen der Hydrolyse kann eine Addition der Aminogruppen des N-terminalen Endes des Polymermoleküls an das in der Salzform vorliegende monoethylenisch ungesättigte Carbonsäurederivat stattfinden.

In Abhängigkeit der vorne beschriebenen Polymerisationsbedingungen können die primären Polymerisationsprodukte auch ethylenisch ungesättigte Endgruppen besitzen. Daher kann es sinnvoll sein, dem Reaktionsgemisch während der basischen Hydrolyse gegebenenfalls auch Aminocarbonsäuren, beispielsweise Glycin, Asparaginsäure, Lysin, Glutaminsäure etc., zuzusetzen. Durch diese Maßnahme wird eine Pfropfung der Polymerendgruppen erreicht.

Die polymeren freien Säuren lassen sich aus den Salzen aber auch durch kontinuierliche oder diskontinuierliche Ionenaustauscherbehandlung freisetzen.

Die erfindungsgemäß hergestellten Polymere zeichnen sich durch ein verbessertes Calciumbindevermögen aus. Weiterhin zeigen sie Komplexbildungseigenschaften gegenüber Schwermetallen wie beispielsweise Kupfer, Eisen etc.. Sie können als Zusatz in phosphatarmen und phosphatfreien Wasch- und Reinigungsmitteln verwendet werden. Die Polymerisate sind Builder für Waschmittel und bewirken während des Waschvorgangs eine Verminderung der Inkrustierung und Vergrauung auf dem gewaschenen Textilgut.

Weiterhin inhibieren und verzögern die erfindungsgemäß hergestellten Polyasparaginsäuren die Ausfällung von Calciumcarbonat, Calciumsulfat und Calciumphosphat, aus wäßrigen Lösungen und sind daher als Wasserbehandlungsmittel geeignet. Sie können dem Wasser in Kühlkreisläufen, Verdampfern oder Meerwasserentsalzungsanlagen zugesetzt werden. Außerdem können sie als Belagsverhinderer bei der Eindampfung von Zuckersaft eingesetzt werden.

Aufgrund ihrer komplexbildenden Eigenschaft gegenüber Schwermetallen können die Polymere auch als Stabilisierungsmittel für Bleichmittel wie Wasserstoffperoxid in Bleichprozessen dienen.

### Beispiele

Die primären Polymerisationsprodukte wurden mittels Elementaranalyse charakterisiert. Hierbei wurden neben Kohlenstoff und Wasserstoff noch drei unterschiedliche Stickstoffarten bestimmt. Die Analyse unterschied zwischen ionisch gebundenem Stickstoff (Ammoniumionen), hydrolytisch empfindlichem Stickstoff (beispielsweise Amid- oder Imid-Stickstoff) und "nicht hydrolysierbarem" Stickstoff (Amin-Stickstoff). Auf diese Weise konnte die für eine verbesserte Wirksamkeit notwendige optimale Hydrolyse verfolgt werden.

Die nach der Hydrolyse erhaltenen erfindungsgemäßen Polymere wurden mit Hilfe von ¹H-NMR und ¹³C-NMR sowohl in der Salzform als auch nach Überführung in die freie Säure analysiert. Die Iminodibernsteinsäure-Einheiten wurden anhand der chemischen Verschiebungen von δ₁ = 3,8 ppm (¹H-NMR) und δ₂ = 55,5 ppm (¹³C-NMR) für die CH-Gruppen sowie von δ₃ = 2,7 ppm (¹H-NMR) und δ₄ = 36,7 ppm (¹³C-NMR) für die CH₂-Gruppen identifiziert.

Der Restmonomerengehalt wurde durch HPLC und die Polymerverteilung durch GPC gegen Polyacrylate oder Polyasparaginsäuren der Firma Sigma als Standard bestimmt.

### Beispiel 1

133g Asparaginsäure wurden in 500 ml Essigsäure unter Rückflußsieden mit 103 g Acetanhydrid tropfenweise vermischt. Die Innentemperatur stieg dabei bis 120°C und die Asparaginsäure ging dabei in Lösung. Die Reaktionslösung wurde über Nacht am Rückflußsieden gehalten. Dann wurde bei Normaldruck die Essigsäure abgedampft. Die Innentemperatur stieg dabei langsam in 3,5 Stunden bis 150°C. Es wurde Vakuum angelegt. Dabei stieg die Innentemperatur weiter bis 198°C bei einer Badtemperatur von 220°C. Zuletzt erreichte die Innentemperatur 210°C, die eine Stunde und 20 Minuten gehalten wurde. Es wurde dann abgekühlt und pulverisiert. Man erhielt 108 g PSI.
M_{w} 1710, Mₙ 1243

Für das Reaktionsprodukt gemäß Beispiel 1 wurde im OECD-Screening Test ein Bioabbau von 100 % ermittelt.

## Patentansprüche

1. Verfahren zur Herstellung biologisch abbaubarer Polymere mit wiederkehrenden Succinyleinheiten, **dadurch gekennzeichnet, dass** man eine gegebenenfalls substituierte 1,4-Butandicarbonsäure oder ein Derivat der 1,4-Butandicarbonsäure mit Acetanhydrid vermischt und danach durch Temperatursteigerung unter Polykondensation zu Polysuccinimid bzw. zu Polyasparaginsäure umsetzt, wobei Acetanhydrid durch das freiwerdende Kondensationswasser in Essigsäure überführt und abdestilliert wird.

2. Verfahren gemäß Anspruch 1, **dadurch gekennzeichnet, dass** als substituierte 1,4-Butandicarbonsäure Asparaginsäure eingesetzt wird.

3. Verfahren gemäß Anspruch 1, **dadurch gekennzeichnet, dass** im Falle des Einsatzes von Asparaginsäure und Acetanhydrid das Verhältnis der Reaktanden zueinander 1:1 beträgt.

4. Verfahren gemäß Anspruch 1, **dadurch gekennzeichnet, dass** Acetanhydrid im Überschuß bis 50 Mol-% eingesetzt wird.

5. Verfahren gemäß Anspruch 1, **dadurch gekennzeichnet, dass** die thermische Polykondensation bei Temperaturen zwischen 100°C und 300°C durchführt wird.

6. Verfahren gemäß Anspruch 1, **dadurch gekennzeichnet, dass** zum Ende der Polykondensation Maleinsäureanhydrid oder weitere Maleinsäure und eine Base zudosiert werden.

7. Verfahren gemäß Anspruch 1, **dadurch gekennzeichnet, dass** die Reaktion der Edukte adiabatisch erfolgt.

8. Verfahren gemäß Anspruch 1, **dadurch gekennzeichnet, dass** die Reaktion in Vorrichtungen zur thermischen Polymerisation wie Verweilrohre, Hochviskosreaktoren, Trocknern, Rührkesselkaskaden, Dünnschichtverdampfern oder Mehrphasen-Wendelrohr-Reaktoren durchgeführt wird.

9. Verfahren gemäß Anspruch 1, **dadurch gekennzeichnet, dass** eine Eduktkomponente an mehreren Stellen entlang eines Rohr- bzw. Mehrphasen-Wendelrohr-Reaktors eindosiert wird.

## Claims

1. Process for preparing biodegradable polymers having repeating succinyl units, **characterized in that** an optionally substituted 1,4-butanedicarboxylic acid or a derivative of 1,4-butanedicarboxylic acid is mixed with acetic anhydride and the mixture is then reacted by polycondensation, which is brought about by raising the temperature, to form polysuccinimide or polyaspartic acid, with acetic anhydride being converted to acetic acid by the water of condensation that is liberated, and being removed by distillation.

2. Process according to Claim 1, **characterized in that** aspartic acid is employed as the substituted 1,4-butanedicarboxylic acid.

3. Process according to Claim 1, **characterized in that** where aspartic acid and acetic anhydride are employed the ratio of the reactants to one another is 1:1.

4. Process according to Claim 1, **characterized in that** acetic anhydride is employed in an excess of up to 50 mol%.

5. Process according to Claim 1, **characterized in that** the thermal polycondensation is conducted at temperatures between 100°C and 300°C.

6. Process according to Claim 1, **characterized in that** toward the end of the polycondensation maleic anhydride or further maleic acid and a base are metered in.

7. Process according to Claim 1, **characterized in that** the starting materials are reacted adiabatically.

8. Process according to Claim 1, **characterized in that** the reaction is conducted in thermal polymerization apparatus such as delay tubes, high-viscosity reactors, dryers, cascades of stirred vessels, thin-film evaporators or multi-phase helical-tube reactors.

9. Process according to Claim 1, **characterized in that** one starting component is metered in at two or more points along a tube reactor or multi-phase helical-tube reactor.

## Revendications

1. Procédé de préparation de polymères biodégradables contenant des unités constitutives succinyle, **caractérisé en ce que** l'on mélange un acide 1,4-butanedicarboxylique éventuellement substitué ou un dérivé de l'acide 1,4-butanedicarboxylique avec de l'anhydride acétique, puis on le transforme en polysuccinimide ou en poly(acide aspartique) par polycondensation en faisant monter la température, l'anhydride acétique étant transformé en acide acétique par l'eau de condensation libérée, et séparé par distillation.

2. Procédé selon la revendication 1, **caractérisé en ce que** l'on utilise de l'acide aspartique comme acide 1,4-butanedicarboxylique substitué.

3. Procédé selon la revendication 1, **caractérisé en ce que**, dans le cas de l'utilisation d'acide aspartique et d'anhydride acétique, le rapport des réactifs entre eux est de 1:1.

4. Procédé selon la revendication 1, **caractérisé en ce que** l'on utilise l'anhydride acétique en un excès allant jusqu'à 50 % en mol.

5. Procédé selon la revendication 1, **caractérisé en ce que** la polycondensation thermique s'effectue à des températures comprises entre 100°C et 300°C.

6. Procédé selon la revendication 1, **caractérisé en ce que**, vers la fin de la polycondensation, on ajoute de l'anhydride maléique ou une quantité supplémentaire d'acide maléique et une base.

7. Procédé selon la revendication 1, **caractérisé en ce que** la réaction des produits de départ s'effectue de manière adiabatique.

8. Procédé selon la revendication 1, **caractérisé en ce que** la réaction s'effectue dans des appareils de polymérisation thermique comme des tubes de contact, des réacteurs pour produits très visqueux, des sécheurs, des cascades de réacteurs munis d'un agitateur, des évaporateurs en couche mince ou des réacteurs à tube hélicoïdal pour plusieurs phases.

9. Procédé selon la revendication 1, **caractérisé en ce que** l'on introduit un constituant de départ en plusieurs endroits le long d'un réacteur tubulaire ou d'un réacteur à tube hélicoïdal pour plusieurs phases.
